# DEMANDE DE BREVET EUROPEEN

(11) **EP 1 316 359 A1**
(43) Date de publication de la demande: **04.06.2003**
(21) Numéro de dépôt: 01403100.9
(22) Date de dépôt: 03.12.2001
(51) Int. Cl.: B01J 29/06, B01D 53/94, B01D 53/86

(54) **Procédé de traitement de gaz pour la réduction des émissions des oxydes d'azote utilisant une ferriérite**

(71) Demandeur: Rhodia Electronics and Catalysis, 17041 La Rochelle Cedex (FR); ATOFINA Research, 7181 Seneffe (Feluy) (BE); Peugeot Citroen Automobiles SA, 92200 Neuilly sur Seine (FR); Universite Libre de Bruxelles, 1050 Bruxelles (BE)
(72) Inventeur: La désignation de l'inventeur n'a pas encore été déposée
(74) Mandataire: Dubruc, Philippe

(57) **Abrégé**

L'invention concerne un procédé de traitement de gaz pour la réduction des émissions des oxydes d'azote, comme des gaz de chaudières de centrales thermiques ou des gaz d'échappement de moteurs fonctionnant en mélange pauvre. Ce procédé est caractérisé en ce qu'on utilise à titre de catalyseur une ferriérite échangée avec une terre rare choisie parmi le cérium, le praséodyme, le samarium, le terbium, l'europium et l'ytterbium.

## Description

La présente invention concerne un procédé de traitement de gaz pour la réduction des émissions des oxydes d'azote utilisant une ferriérite.

On sait qu'à la suite de la mise en place de réglementations de plus en plus contraignantes, les émissions de polluants atmosphériques, notamment des oxydes d'azote (NOx), vont devoir être réduites de manière significative dans les prochaines années.

Les centrales thermiques notamment et les moteurs d'automobiles tout particulièrement émettent des gaz contenant des oxydes d'azote. Dans le cas de ces moteurs, la réduction des NOx des gaz d'échappement est effectuée à l'aide de catalyseurs "trois voies" qui utilisent stoechiométriquement les gaz réducteurs présents dans le mélange. Tout excès d'oxygène se traduit par une détérioration brutale des performances du catalyseur. Or, certains moteurs comme les moteurs diesel ou les moteurs essence fonctionnant en mélange pauvre (lean burn) sont économes en carburant mais émettent des gaz d'échappement qui contiennent en permanence un large excès d'oxygène d'au moins 2% par exemple. Un catalyseur trois voies standard est donc sans effet sur les émissions en NOx de ces moteurs.

Il existe donc un besoin réel de catalyseurs efficaces pour le traitement de gaz contenant des NOx. Par ailleurs, le problème se pose de disposer de catalyseurs qui soient actifs à basses températures et/ou sur une large gamme de températures.

Dans ce but, le procédé de l'invention, pour le traitement de gaz pour la réduction des émissions des oxydes d'azote, est caractérisé en ce qu'on utilise à titre de catalyseur une ferriérite échangée avec une terre rare choisie parmi le cérium, le praséodyme, le samarium, le terbium, l'europium et l'ytterbium.

D'autres caractéristiques, détails et avantages de l'invention apparaîtront encore plus complètement à la lecture de la description qui va suivre, ainsi que des divers exemples concrets mais non limitatifs destinés à l'illustrer.

Le procédé de l'invention met en oeuvre une ferriérite.

La ferriérite (FER) est une zéolithe connue qui peut être naturelle ou synthétique. Il s'agit d'un silicate complexe de silicium et d'aluminium, de structure cristalline orthorhombique et dont les paramètres de maille sont généralement a=19,2Å, b=14,1Å, c=7,5Å, ces valeurs n'étant données qu'à titre illustratif. Elle peut être représentée notamment par la formule NH₄[(AlₓSi₃₆₋ₓO₇₂], cette formule n'étant donnée qu'à titre indicatif dans la mesure notamment où le rapport SiO₂/Al₂O₃ peut varier dans de très larges proportions, la ferriérite pouvant être à base de silicium seul (x=0) et ce rapport SiO₂/Al₂O₃ pouvant atteindre la valeur de 90 par exemple, cette valeur n'étant pas limitative. Les différentes ferriérites peuvent comprendre d'autres cations échangeables du type magnésium, sodium, potassium ou calcium par exemple. Une autre forme envisageable de la ferriérite est la forme acide dans laquelle l'hydrogène remplace les cations précités ou le cation ammonium. Cette ferriérite sous forme acide peut être obtenue par calcination d'une ferriérite de type NH₄[(AlₓSi₃₆₋ₓO₇₂]. En outre, le silicium de la ferriérite peut être en partie substitué, par exemple par du gallium, du strontium ou du fer.

La caractéristique principale du procédé de l'invention est l'utilisation d'une ferriérite qui est échangée avec une terre rare (TR) choisie parmi le cérium, le praséodyme, le samarium, le terbium, l'europium et l'ytterbium. Par "échangée", on entend, d'une manière classique, que les ions échangeables de la ferriérite (ammonium, sodium et/ou calcium par exemple) ou encore hydrogène pour la ferriérite acide, ont été au moins partiellement remplacés ou substitués par la terre rare précitée.

Selon un mode de réalisation préféré de l'invention, la terre rare est le cérium.

La ferriérite peut être totalement échangée avec la terre rare précitée. Le taux d'échange avec la terre rare peut être toutefois plus particulièrement compris entre 15 et 95%, notamment entre 30 et 95%.

Dans la présente description, le taux d'échange est défini comme étant le rapport 3[TR]/[AI] exprimé en pour-cent, les concentrations en terre rare [TR] et en aluminium [AI] étant déterminées par analyse ICPMS et exprimées en mole/l.

La ferriérite échangée peut être préparée par des méthodes connues. Par exemple, on forme une solution ou une suspension aqueuse d'une ferriérite naturelle ou synthétique et on ajoute à cette solution ou suspension un sel de la terre rare soluble dans l'eau ou un sol de cette terre rare. Ce sel peut être par exemple un nitrate ou un acétate. La quantité de sel introduite est fonction du taux d'échange que l'on désire obtenir. On laisse réagir le sel et la ferriérite, puis on filtre, on lave et on sèche éventuellement, et on calcine ce par quoi obtient ainsi la ferriérite échangée. Il faut noter que la réaction entre le sel ou le sol et la ferriérite peut se faire en chauffant le milieu réactionnel et sous reflux, par exemple à une température comprise entre 70°C et 99°C, plus particulièrement entre 95°C et 99°C.

Il est aussi possible de préparer la ferriérite échangée par réaction solide/solide. On mélange ainsi un sel de la terre rare avec une ferriérite et on chauffe à une température de 600°C par exemple.

La ferriérite peut aussi être préparée in situ. Dans ce cas, on forme un mélange qui comprend un substrat sur lequel va être formé la ferriérite. Ce substrat peut être par exemple un monolithe métallique ou en céramique. Le mélange comprend en outre une source de silicium, une source d'aluminium et un agent directeur de structure qui peut être choisi par exemple parmi la pyrolidine, la pyridine, la pipéridine, l'éthylène-diamine. Ce mélange est ensuite chauffé dans un autoclave. On forme ainsi une ferriérite. On peut ensuite procéder à l'échange en opérant comme décrit précédemment.

Selon un mode de réalisation particulier de l'invention, le procédé est mis en oeuvre avec un catalyseur qui comprend en outre une ferriérite échangée avec du platine. Plus précisément, le procédé peut être mis en oeuvre en utilisant un premier catalyseur disposé en amont par rapport au sens d'écoulement du gaz à traiter et qui correspond à la ferriérite échangée avec une terre rare telle que décrite plus haut et un second catalyseur qui correspond à la ferriérite échangée avec du platine. On notera que les définitions données plus haut pour la ferriérite échangée avec une terre rare s'appliquent aussi à cette ferriérite échangée avec du platine. Dans le cas de ce mode de réalisation, la proportion en poids entre les deux catalyseurs peut être quelconque. De préférence, cette proportion peut être voisine de 1 ou égale à 1. Ce mode de réalisation particulier présente l'avantage d'avoir une activité significative à une température assez basse et sur une gamme de température étendue. Par exemple, on peut noter un taux de conversion des NOx de 45% environ à partir de 250°C et dans un domaine de température compris entre 250°C et 500°C environ.

Le procédé de l'invention, mettant en oeuvre la ferriérite ou le catalyseur tels que décrits ci-dessus, s'applique au traitement de gaz pouvant comprendre des oxydes d'azote en combinaison éventuellement avec des oxydes de carbone et/ou des hydrocarbures, en vue de la réduction des émissions des oxydes d'azote.

Les gaz susceptibles d'être traités par la présente invention sont, par exemple, des effluents d'unités industrielles comme des ateliers de synthèse d'acide nitrique ou adipique ou les gaz issus d'unité d'incinération. Les gaz peuvent être aussi ceux issus d'installations stationnaires du type turbines à gaz ou chaudières de centrales thermiques ou encore les gaz issus de moteurs à combustion interne. Dans ce dernier cas, il peut s'agir notamment de moteurs fonctionnant en mélange pauvre, plus particulièrement de moteurs diesel ou de moteurs essence. Il s'agit aussi dans ce cas de gaz présentant une teneur élevée en oxygène. On entend ici des gaz présentant un excès d'oxygène par rapport à la quantité nécessaire pour la combustion stoechiométrique des carburants et, plus précisément, des gaz présentant en permanence un excès d'oxygène par rapport à la valeur stoechiométrique λ = 1. La valeur λ est corrélée au rapport air/carburant d'une manière connue en soi notamment dans le domaine des moteurs à combustion interne. La teneur en oxygène, exprimée en volume de ces gaz, est généralement d'au moins 2%, notamment d'au moins 5%, plus particulièrement d'au moins 10%, cette teneur pouvant par exemple se situer entre 5 et 20%. Le procédé de l'invention s'applique tout particulièrement au traitement des gaz issus de moteurs essence à injection directe fonctionnant en mélange pauvre.

Les gaz peuvent contenir des hydrocarbures et, dans un tel cas, une des réactions que l'on cherche à catalyser est la réaction HC (hydrocarbures) + NO_{X}.

Les hydrocarbures qui peuvent être utilisés comme agent réducteur pour l'élimination des NOx sont notamment les gaz ou les liquides des familles des hydrocarbures saturés, des hydrocarbures comprenant des liaisons éthyléniques ou acétyléniques, des hydrocarbures aromatiques et les hydrocarbures des coupes pétrolières comme par exemple le méthane, l'éthane, le propane, le butane, le pentane, l'hexane, l'éthylène, le propylène, l'acétylène, le butadiène, le benzène, le toluène, le xylène, le kérosène, le gaz oil et les essences.

Les gaz peuvent contenir aussi comme agent réducteur, des composés organiques contenant de l'oxygène. Ces composés peuvent être notamment les alcools du type par exemple alcools saturés comme le méthanol, l'éthanol ou le propanol; les éthers comme l'éther méthylique ou l'éther éthylique; les esters comme l'acétate de méthyle et les cétones.

L'invention s'applique aussi au traitement de gaz ne contenant pas d'hydrocarbures ni de composés organiques comme agent réducteur.

L'invention concerne aussi un système catalytique pour le traitement de gaz en vue de la réduction des émissions des oxydes d'azote. Ce système est caractérisé en ce qu'il comprend une ferriérite échangée avec une terre rare choisie parmi le cérium, le praséodyme, le samarium, le terbium, l'europium et l'ytterbium telle que décrite plus haut.

Pour la mise en oeuvre du mode de réalisation particulier qui a été décrit plus haut, ce système comprend une ferriérite échangée avec une terre rare et telle que décrite plus haut et une ferriérite échangée avec du platine. Plus particulièrement, le système peut comprendre un premier lit catalytique à base de la ferriérite échangée avec une terre rare et un second lit catalytique à base de la ferriérite échangée avec du platine et disposé en aval du premier lit catalytique par rapport au sens d'écoulement du gaz à traiter.

Dans ce système, la ferriérite échangée peut se présenter sous diverses formes telles que granulés, billes, cylindres ou nid d'abeille de dimensions variables. La ferriérite échangée peut être appliquée sur tout support utilisé habituellement dans le domaine de la catalyse, c'est à dire notamment des supports inertes thermiquement. Ce support peut être choisi parmi l'alumine, l'oxyde de titane, l'oxyde de zirconium, la silice, les spinelles, les zéolites, les silicates, les phosphates de silicoaluminium cristallins, les phosphates d'aluminium cristallins.

La ferriérite échangée peut aussi être utilisée dans des systèmes catalytiques comprenant un revêtement (wash coat) constitué par, ou comprenant cette ferriérite, le revêtement étant disposé sur un substrat du type par exemple monolithe métallique ou en céramique. Le revêtement peut comporter lui aussi un support du type de ceux mentionnés plus haut. Ce revêtement est obtenu par mise en suspension de la ferriérite échangée, éventuellement en mélange avec un support du type précité, suspension qui peut être ensuite déposée sur le substrat.

Les systèmes sont montés d'une manière connue dans les pots d'échappement des véhicules dans le cas de l'application au traitement des gaz d'échappement.

Des exemples vont maintenant être donnés. Les produits suivants ont été utilisés :
- NH₄-Ferrierite ZSM-35 Zeolyst/Shell de rapport Si/Al 11,7
- zéolithe ZSM-5
- acétate de cérium Sigma-Aldrich à 99,9%
- ferriérite échangée avec du cérium. Cette ferriérite a été préparée de la manière suivante.
   10 à 20 grammes de NH₄-Ferrierite sont échangés avec 1000 ml d'une solution d'acétate de cérium de 0,01 à 0,1 M dans de l'eau déminéralisée sur une durée de 5 heures à 90°C. Selon le taux d'échange d'ion désiré, cet échange est répété avec 1000 autres ml d'une solution fraîchement préparée d'acétate de cérium. Pour un taux d'échange de 80 à 90 %, la procédure d'échange doit être effectuée 3 fois. Après l'échange, la zéolithe est soigneusement lavée avec au moins 5 litres d'eau déminéralisée, séchée pendant une nuit à 120°C et calcinée de 500 à 600°C pendant 6 heures. La vitesse de montée en température pendant la calcination est de 5°C/min, la vitesse de refroidissement est de 10°C/min.
- ferriérite échangée avec de l'argent. Cette ferriérite échangée a été préparée selon la méthode décrite ci-dessus. On est parti de la zéolithe ZSM-35 mentionnée plus haut et en utilisant une solution de nitrate d'argent (0,06M). L'échange s'est fait à température ambiante en 2 heures, le taux d'échange est de 28%.
- zéolithe H-ZSM-5 échangée avec du cérium. Cette zéolithe a été échangée avec du cérium à un taux de 15% selon la méthode décrite ci-dessus.

Le mélange gazeux traité dans les exemples est le suivant :
NOx : 400 ppm vol.
O₂ : 10% vol.
C₃H₆ : 400 ppm vol.
H₂O : 10% vol.
N₂ : complément à 100%
VVH : 42.000h⁻¹

Le catalyseur est utilisé dans un réacteur tubulaire sous forme d'une poudre de 500µm à 800µm et dans une quantité de 2g et le débit de gaz est de 2l/min.

### EXEMPLE 1

On a utilisé des ferriérites présentant différents taux d'échange de cérium.

| Produit | Taux d'échange |
|---|---|
| 1-1 | 12% |
| 1-2 | 19% |
| 1-3 | 31% |
| 1-4 | 60% |
| 1-5 | 72% |
| 1-6 | 93% |
| 1-7 | 95% |

On traite avec les produits ci-dessus le mélange gazeux décrit plus haut. Les résultats sont donnés dans la tableau 1 qui suit.

**Tableau 1**

| Produit | CM NOx | TCM | Gamme de température (CNOx>50%) |
|---|---|---|---|
| 1-1 | 78% | 370°C | 315-485°C |
| 1-2 | 87,5% | 360°C | 315-495°C |
| 1-3 | 97% | 350°C | 280-505°C |
| 1-4 | 90% | 350°C | 260-435°C |
| 1-5 | 85% | 350°C | 270-470°C |
| 1-6 | 100% | 350°C | 275-510°C |
| 1-7 | 94% | 330°C | 240-440°C |
| CM NOx : indique le taux de conversion des NOx maximum obtenu | | | |
| TCM : indique la température à laquelle on obtient le taux de conversion des NOx maximum | | | |
| Gamme de température (CNOx>50%) : indique la gamme de températures entre lesquelles le produit permet d'obtenir un taux de conversion des NOx supérieur à 50%. | | | |

### EXEMPLE 2 COMPARATIF

On traite le même mélange gazeux que précédemment avec la ferriérite échangée avec de l'argent (produit 2-1) et la zéolithe ZSM-5 échangée avec du cérium (produit 2-2) décrites plus haut. Les résultats sont donnés dans la tableau 2 qui suit.

**Tableau 2**

| Produit | CM NOx | TCM |
|---|---|---|
| 2-1 | 35% | 375°C |
| 2-2 | 30% | 350°C |

On voit que les produits de cet exemple ne permettent pas d'obtenir un taux de conversion des NOx supérieur à 50%.

## Revendications

1. Procédé de traitement de gaz pour la réduction des émissions des oxydes d'azote, **caractérisé en ce qu'**on utilise à titre de catalyseur une ferriérite échangée avec une terre rare choisie parmi le cérium, le praséodyme, le samarium, le terbium, l'europium et l'ytterbium.

2. Procédé selon la revendication 1, caractérisée en qu'on utilise une ferriérite qui présente un taux d'échange avec la terre rare précitée compris entre 15 et 95%, plus particulièrement entre 30 et 95%.

3. Procédé selon la revendication 1 ou 2, caractérisée en qu'on utilise une ferriérite échangée avec le cérium.

4. Procédé selon l'une des revendications précédentes caractérisée en qu'on utilise un catalyseur qui comprend en outre une ferriérite échangée avec du platine.

5. Procédé selon la revendication 4, **caractérisé en ce qu'**on utilise un premier catalyseur comprenant la ferriérite échangée précitée et un second catalyseur comprenant une ferriérite échangée avec du platine, le premier catalyseur étant disposé en amont du second par rapport au sens d'écoulement des gaz traités.

6. Procédé selon l'une des revendications précédentes, **caractérisé en ce qu'**on traite un gaz d'échappement de moteurs fonctionnant en mélange pauvre, plus particulièrement d'un moteur diesel ou d'un moteur essence.

7. Procédé selon la revendication 6, **caractérisé en ce qu'**on traite un gaz d'échappement d'un moteur essence à injection directe.

8. Système catalytique pour la mise en oeuvre d'un procédé de traitement de gaz pour la réduction des émissions des oxydes d'azote selon l'une des revendications 1 à 3 et 6 à 7, **caractérisé en ce qu'**il comprend une ferriérite échangée avec une terre rare choisie parmi le cérium, le praséodyme, le samarium, le terbium, l'europium et l'ytterbium.

9. Système catalytique pour la mise en oeuvre d'un procédé de traitement de gaz pour la réduction des émissions des oxydes d'azote selon l'une des revendications 4 à 7, **caractérisé en ce qu'**il comprend en outre une ferriérite échangée avec du platine.

10. Système selon la revendication 9, **caractérisé en ce qu'**il comprend une première ferriérite échangée avec une terre rare choisie parmi le cérium, le praséodyme, le samarium, le terbium, l'europium et l'ytterbium et une seconde ferriérite échangée avec du platine, la première ferriérite étant disposée en amont de la seconde par rapport au sens d'écoulement des gaz traités.
